(19) Europäisches Patentamt / European Patent Office / Office européen des brevets

(11) **EP 2 042 544 B1**

(12) **EUROPEAN PATENT SPECIFICATION**

(45) Date of publication and mention
of the grant of the patent:
**26.10.2016 Bulletin 2016/43**

(51) Int Cl.:
**C08J 3/20** *(2006.01)*        **C08K 5/372** *(2006.01)*
**C08L 21/00** *(2006.01)*        **B60C 1/00** *(2006.01)*

(21) Application number: **08015138.4**

(22) Date of filing: **27.08.2008**

(54) **MANUFACTURING METHOD OF RUBBER COMPOSITION AND PNEUMATIC TIRE**

VERFAHREN ZUR HERSTELLUNG EINER GUMMIZUSAMMENSETZUNG UND LUFTREIFEN

PROCÉDÉ DE FABRICATION D'UNE COMPOSITION DE CAOUTCHOUC ET PNEU

(84) Designated Contracting States:
**DE FR**

(30) Priority: **27.09.2007 JP 2007251404**

(43) Date of publication of application:
**01.04.2009 Bulletin 2009/14**

(73) Proprietor: **Sumitomo Rubber Industries, Ltd.
Hyogo-ken (JP)**

(72) Inventor: **Hochi, Kazuo
Sumitomo Rubber Industries, Ltd
Kobe-shi
Hyogo 651-0072 (JP)**

(74) Representative: **Manitz, Finsterwald & Partner
GbR
Postfach 31 02 20
80102 München (DE)**

(56) References cited:
**EP-A- 1 077 228        EP-A- 1 686 151
EP-A- 1 792 937        EP-A- 1 878 590**

EP 2 042 544 B1

**Description**

BACKGROUND OF THE INVENTION

Field of the Invention

The present invention relates to a manufacturing method of a rubber composition that is superior in low heat build-up property and wear resistance, and a pneumatic tire in which the rubber composition is used in a tread.

Description of the Background Art

In recent years, along with high demand for lowering fuel consumption of an automobile, development for decreasing the rolling resistance of a pneumatic tire has been proceeded. In order to decrease the rolling resistance of a tire, it is important to investigate a rubber composition for a tread having a high ratio of occupying in the tire among tire configuration members. The low heat build-up property of the rubber composition for a tread is indispensable for decreasing the rolling resistance, and there is a method of reducing the compounded amount of a reinforcing filler. In that case, the hardness of the rubber composition decreases and the entire tire softens, and the handling performance and wet grip performance of an automobile tend to deteriorate.

In Japanese Patent Laying-Open No. 2006-233177 (Patent Document 1), a rubber composition is disclosed in which the rolling resistance performance, the wet skid performance, and the driving stability of a car are improved with good balance, that contains a total of 30 to 150 parts by mass of (a) silica with a nitrogen adsorption specific surface area of 100 $m^2$/g or less and (b) silica with a nitrogen adsorption specific surface area of 180 $m^2$/g or more to 100 parts by mass of a rubber component, and that satisfies the following formula.

$$[\text{Content of Silica (a)}] \times 0.2 \leq [\text{Content of Silica (b)}] \leq [\text{Content of Silica (a)}] \times 6.5$$

Further, in Japanese Patent Laying-Open No. 2007-177221 (Patent Document 2), a rubber composition for a tire is disclosed that contains 30 to 150 parts by mass of silica with a nitrogen adsorption specific surface area of 20 to 200 $m^2$/g and a pH of 7.0 to 12.0 when it is dispersed into water and made into a 5% aqueous dispersion to 100 parts by mass of a rubber component in order to improve fuel economy, wet skid performance, wear resistance, and driving stability with good balance.

EP 1 878 590 A1, which is a prior art document under Art. 54 (3) EPC, discloses a rubber composition for covering a carcass cord comprising 25 to 80 parts by mass of silica, 1 to 15 parts by mass of a silane coupling agent and 3 to 30 parts by mass of a specific organic vulcanizing agent.

EP 1 077 228 A1 relates to a pneumatic tire having a rubber component comprising of 100 parts by weight of at least one elastomer containing olefinic unsaturation and 1 to 20 phr of a liquid organic polysulfide polymer according to a specific formula and having a molecular weight between 500 and 10,000.

SUMMARY OF THE INVENTION

The present invention provides a manufacturing method of a rubber composition that is superior in low heat build-up property and wear resistance and a pneumatic tire in which the rubber composition obtained by the manufacturing method is used in a tread.

The present invention provides a manufacturing method for a pneumatic tire, wherein a rubber composition is used in the tread of the pneumatic tire,

wherein the rubber composition contains 30 to 150 parts by mass of silica and 0.5 to 10 parts by mass of an organic vulcanization agent to 100 parts by mass of a rubber component, wherein the method comprises

a first kneading step of kneading the organic vulcanization agent and silica into the rubber component, and

a second kneading step of kneading thereafter a vulcanization agent and a vulcanization accelerator into the kneaded product obtained in the first kneading step, wherein

the organic vulcanization agent is represented by the following general formula (1):

$$R_1\text{-}(R\text{-}S_x)_n\text{-}R_2 \qquad (1),$$

in which R is $(CH_2\text{-}CH_2\text{-}O)_m\text{-}CH_2\text{-}CH$, and $R_1$ and $R_2$ are independently hydrogen, a methyl group, a thiol group, a hydroxyl group, a carboxyl group, or an aldehyde group, X is an integer of 3 to 6, n is an integer of 10 to 400, and m is an integer of 1 to 5.

The kneading temperature of the above-described first kneading step is desirably in the range of 120°C to 160°C, and the kneading temperature of the second kneading step is desirably in the range of 70°C to 100°C. The present invention further relates to a rubber composition obtained by the above-described manufacturing method and a pneumatic tire using the rubber composition in a tread.

In the manufacturing method of the rubber composition compounding an organic vulcanization agent having a specific chemical structure in the present invention, the dispersibility of silica in the rubber composition is improved due to an interaction of the organic vulcanization agent and silica by performing kneading of the organic vulcanization agent and silica into the rubber component in the first kneading step. Further, bonding or an interaction of the organic vulcanization agent adsorbed on the surface of the silica and the rubber molecules is assumed to occur, and as a result, a rubber composition that is superior in low heat build-up property and wear resistance can be obtained.

DESCRIPTION OF THE PREFERRED EMBODIMENTS

The present invention provides a manufacturing method for a pneumatic tire, wherein a rubber composition is used in the tread of the pneumatic tire, wherein the rubber composition contains 30 to 150 parts by mass of silica and 0.5 to 10 parts by mass of an organic vulcanization agent represented by the above-described general formula (1) to 100 parts by mass of a rubber component. The manufacturing method includes a first kneading step and a second kneading step.

In the first kneading step, silica and the organic vulcanization agent are compounded at the same time into the rubber component or the organic vulcanizing agent is added after silica is compounded and kneaded into the rubber component. Other compounding agents excluding a vulcanization agent such as sulfur and a vulcanization accelerator, such as carbon black, a silane coupling agent, zinc oxide, stearic acid, an antioxidant, a wax, and aromatic oil, can be kneaded at the same time with silica and the organic vulcanization agent. However, they can be added and kneaded after silica and the organic vulcanization agent are kneaded sufficiently.

The first kneading step is desirably performed at a temperature in the range of 120°C to 160°C for 2 to 10 minutes using a Banbury mixer or the like. When the kneading temperature exceeds 160°C and the kneading time exceeds 6 minutes, vulcanization of the rubber proceeds due to the organic vulcanization agent, and hinders processability of the second kneading step thereafter.

In the second kneading step, the kneading is continued by further adding a vulcanization agent such as sulfur and a vulcanization accelerator into the kneaded product after the above-described first kneading step. The second kneading step is desirably performed at a temperature in the range of 70°C to 100°C for 2 to 8 minutes using a roll or the like. Because vulcanization of the rubber proceeds due to sulfur when the kneading temperature exceeds 100°C, molding thereafter becomes difficult. It is possible to appropriately compound the organic vulcanization agent represented by the above-described general formula (1) and use sulfur in combination in the second kneading step.

<Rubber Component>

The rubber component is preferably a diene rubber. Examples of the diene rubber include a natural rubber (NR), an isoprene rubber (IR), a butadiene rubber (BR), a styrene-butadiene rubber (SBR), an acrylonitrile-butadiene rubber (NBR), a chloroprene rubber (CR), a butyl rubber (IIR), and a styrene-isoprene-butadiene copolymer rubber (SIBR). These diene rubbers may be used alone, and two types or more may be combined and used. An SBR is preferable in order to improve the rolling resistance performance and the wet grip performance with good balance especially in the rubber composition for a tread.

<Organic Vulcanization Agent>

The above-described organic vulcanization agent is a compound satisfying the following general formula (1):

$$R_1\text{-}(R\text{-}S_x)_n\text{-}R_2 \qquad (1)$$

(wherein R is $(CH_Z\text{-}CH_2\text{-}O)_m\text{-}CH_2\text{-}CH$, and $R_1$ and $R_2$ are independently hydrogen, a methyl group, a thiol group, a hydroxy group, a carboxyl group, or an aldehyde group, X is an integer of 3 to 6, n is an integer of 10 to 400, and m is an integer of 1 to 5).

In the formula, x is preferably 3 to 6, and more preferably 3 to 5. When x is less than 3, the vulcanization tends to be slow. Further, when x exceeds 6, the manufacturing of the rubber composition tends to become difficult.

In the formula, n is preferably an integer of 10 to 400, and more preferably an integer of 10 to 300. When n is less than 10, the organic vulcanization agent tends to evaporate easily, and the handling tends to become difficult. Further, when n exceeds 400, compatibility of the organic vulcanization agent with the rubber tends to deteriorate.

In the formula, m is preferably an integer of 2 to 5, more preferably an integer of 2 to 4, and further preferably an integer of 2 to 3. When m is less than 2, the bending resistance performance tends to deteriorate. Further, when m exceeds 5, the hardness of the rubber composition tends to become insufficient.

The content of the organic vulcanization agent is preferably 0.5 parts by mass or more to 100 parts by mass of a rubber component, more preferably 1 part by mass or more, and further preferably 2 parts by mass or more. When the content of the organic vulcanization agent is less than 0.5 parts by mass, the wear resistance tends to deteriorate. Further, the content of the organic vulcanization agent is preferably 30 parts by mass or less, and more preferably 25 parts by mass or less. When the content of the organic vulcanization agent exceeds 30 parts by mass, the hardness increases excessively, and the grip performance tends to deteriorate.

<Silica>

Silica in the rubber composition of the present invention bonds chemically or physically, or forms a complex by being kneaded with the organic vulcanization agent preliminarily, and disperses uniformly in a matrix of the rubber component. The type of silica is not limited as long as it has such a function, and dry method silica (silicic anhydride), wet method silica (silicic anhydride), and the like may be used for example. Especially, wet method silica having many silanol groups on the surface and high reactivity with a silane coupling agent is preferable. The nitrogen adsorption specific surface area ($N_2SA$) of silica is 20 $m^2$/g or more, and preferably 40 $m^2$/g or more. When $N_2SA$ of silica is less than 20 $m^2$/g, the wear resistance decreases. Further, $N_2SA$ of silica is 200 $m^2$/g or less. When $N_2SA$ of silica exceeds 200 $m^2$/g, the wet grip performance deteriorates.

The pH when silica is dispersed into water and made into a 5% aqueous dispersion (5%pH) is 7.0 or more, preferably 7.5 or more, and more preferably 8.0 or more. When the 5%pH of silica is less than 7.0, a coupling reaction with the silane coupling agent is not promoted, and improvements in both the fuel economy and the wet grip performance are not achieved simultaneously. Further, the 5%pH of silica is 12.0 or less, preferably 11.5 or less, and more preferably 11.0 or less. When the 5%pH of silica exceeds 12.0, the scorch time becomes short and the processability deteriorates.

The content of silica is 30 parts by mass or more, and preferably 45 parts by mass or more to 100 parts by mass of the rubber component. When the content of silica is less than 30 parts by mass, sufficient improvement effects by compounding silica cannot be obtained. Further, the content of silica is 150 parts by mass or less, and preferably 120 parts by mass or less. When the content of silica exceeds 150 parts by mass, dispersion of silica into the rubber becomes difficult, and the processability of the rubber deteriorates.

In the present invention, for the reason that the coupling reaction with the silane coupling agent proceeds efficiently by compounding silica having the above-described characteristics in the rubber component, the fuel economy improves as compared with the case where conventional silica is compounded.

<Silane Coupling Agent>

The silane coupling agent is preferably used together with silica in the above-described rubber composition. A silane coupling agent that has been conventionally generally used together with silica can be used as the silane coupling agent in the present invention. Examples thereof include bis(3-triethoxysilylpropyl)polysulfide, bis(2-triethoxysilylethyl)polysulfide, bis(3-trimethoxysilylpropyl)polysulfide, bis(2-trimethoxysilylethyl)polysulfide, bis(4-triethoxysilylbutyl)polysulfide, and bis(4-trimethoxysilylbutyl)polysulfide, and these silane coupling agents may be used alone, or two or more types may be combined and used. Bis(3-triethoxysilylpropyl)disulfide and the like are preferably used.

In the case of using the silane coupling agent with silica, the content of the silane coupling agent is preferably 0.5 parts by mass or more, and more preferably 1 part by mass or more to 100 parts by mass of silica. When the content of the silane coupling agent is less than 0.5 parts by mass, dispersibility of silica tends to deteriorate. Further, the content of the silane coupling agent is preferably 10 parts by mass or less, and more preferably 15 parts by mass or less. When the content of the silane coupling agent exceeds 10 parts by mass, bleeding tends to occur.

<Other Compounding Agents>

The rubber composition of the present invention can contain carbon black, a reinforcing filler other than silica such as clay, an antioxidant, a softener, zinc oxide, stearic acid, a wax, a vulcanization agent other than an organic vulcanization agent, a silane coupling agent, a vulcanization accelerator, a process aid, and the like at a normally used amount depending on necessity.

The tire of the present invention is preferably made from the above-described rubber composition. At least, the pneumatic tire in accordance with the present inventions has a tread using the rubber composition. The tread can be produced by a method of pasting a sheet-shaped rubber composition together in a prescribed shape or a method of inserting the rubber composition in an extruder having two or more tubes and forming the rubber composition into two layers at a head outlet of the extruder.

Because an organic vulcanization agent and silica are kneaded into the rubber component in the first kneading step in the manufacturing method of the rubber composition of the present invention as described above, a rubber composition can be obtained in which the reinforcing effect of the rubber composition is improved and that is superior in low heat build-up property and wear resistance, and a pneumatic tire in which the rubber composition is used in a tread has excellent rolling resistance and contributes to low fuel consumption.

EXAMPLES

<Examples 1 to 2 and Comparative Examples 1 to 3>

A rubber composition was kneaded in the following two steps based on the compounding content shown in Table 1. The compounding content shows parts by mass to 100 parts by mass of a rubber component.

<First Kneading Step>

Silica, an organic vulcanization agent, a silane coupling agent, zinc oxide, stearic acid, an antioxidant, a wax, and aromatic oil were compounded into a rubber component of an SBR and a BR based on the compounding table shown in Table 1, and the mixture was kneaded at 150°C for 3 minutes using a Banbury mixer.

<Second Kneading Step>

Sulfur and a vulcanization accelerator were added into the kneaded product obtained in the first kneading step, and a non-vulcanized rubber composition was obtained by kneading the mixture at 80°C for 3 minutes using a roll. A tire for testing (tire size: 195/65R15) was manufactured by molding the non-vulcanized rubber composition into a tread shape, pasting the rubber composition together with other tire members, and press vulcanizing them at 160°C for 20 minutes.

Table 1

| | | | Example 1 | Example 2 | Comparative Example 1 | Comparative Example 2 | Comparative Example 3 |
|---|---|---|---|---|---|---|---|
| First Kneading Step | SBR | (Note 1) | 85 | 85 | 85 | 85 | 85 |
| | BR | (Note 2) | 15 | 15 | 15 | 15 | 15 |
| | Silica | (Note 3) | 65 | 65 | 65 | 65 | 65 |
| | Organic Vulcanization Agent | (Note 4) | 1 | 3 | - | - | - |
| | Carbon Black | (Note 5) | 10 | 10 | 10 | 10 | 10 |
| | Silane Coupling Agent | (Note 6) | 0.65 | 0.65 | 0.65 | 0.65 | 0.65 |
| | Zinc Oxide | (Note 7) | 5 | 5 | 5 | 5 | 5 |
| | Stearic Acid | (Note 8) | 2 | 2 | 2 | 2 | 2 |
| | Antioxidant | (Note 9) | 2 | 2 | 2 | 2 | 2 |
| | Wax | (Note 10) | 2 | 2 | 2 | 2 | 2 |
| | Aromatic Oil | (Note 11) | 20 | 20 | 20 | 20 | 20 |
| Second Kneading Step | Sulfur | (Note 12) | 1.4 | 1.4 | 1.4 | 1.4 | 1.4 |
| | Organic Vulcanization Agent | (Note 4) | - | - | 1 | - | - |
| | Vulcanization Accelerator (1) | (Note 13) | 1.2 | 1.2 | 1.2 | 1:2 | 1.2 |
| | Vulcanization Accelerator (2) | (Note 14) | 0.6 | 0.6 | 0.6 | 0.6 | 0.6 |
| Characteristics | Low Heat Build-up Property | | 101 | 102 | 100 | 95 | 99 |
| | Wear Resistance | | 101 | 106 | 100 | 89 | 88 |

Various chemicals used in Examples and Comparative Examples are described in detail below.

(Note 1) SBR: "E15" manufactured by Asahi Kasei Chemicals Corporation
(Note 2) BR: "Nipol BR1220 (Vinyl content 1%, non-modified)" manufactured by Zeon Corporation
(Note 3) Silica: "Ultrasil VN3" (hydrous silica manufactured by a wet method, $N_2SA$: 175 $m^2$/g) manufactured by Degussa
(Note 4) Organic Vulcanization Agent: "20S4 polymer (m = 2, x = 4, n = 200, $R_1$ is a thiol group, and $R_2$ is hydrogen in the above-described general formula (1))" manufactured by Kawaguchi Chemical Industry Co., Ltd.
(Note 5) Carbon Black: "SEAST NH" manufactured by Tokai Carbon Co., Ltd.
(Note 6) Silane Coupling Agent: "Si 75" (bis(3-triethoxysilylpropyldisulfide)) manufactured by Degussa-Huels
(Note 7) Zinc Oxide: "Zinc Flower No. 1" manufactured by Mitsui Mining & Smelting Co., Ltd.
(Note 8) Stearic Acid: stearic acid "Tsubaki" manufactured by NOF Corporation
(Note 9) Antioxidant: "Antigen 6C" (N-(1,3-dimethylbutyl)-N'-phenyl-p-phenylenediamine) manufactured by Sumitomo Chemical Co., Ltd.
(Note 10) Wax: "SUNNOC N" manufactured by Ouchi Shinko Chemical Industrial Co., Ltd.
(Note 11) Aromatic Oil: "Process Oil X-140" manufactured by Japan Energy Corporation
(Note 12) Sulfur: Sulfur powder manufactured by Karuizawa Sulfur
(Note 13) Vulcanization Accelerator (1): "NOCCELER-CZ" (N-cyclohexyl-2-benzothiazyl-sulfeneamide) manufactured by Ouchi Shinko Chemical Industrial Co., Ltd.
(Note 14) Vulcanization Accelerator (2): "NOCCELER-D" (N,N'-diphenylguanidine) manufactured by Ouchi Shinko Chemical Industrial Co., Ltd.

<Rolling Resistance Performance>

The rolling resistance of the above-described test tire as measured under conditions of a rim size (15 x 6JJ), a tire inner pressure (230 kPa), a load (3.43 kN), and a speed (80 km/h) using a rolling resistance test machine. With the rolling resistance value in Comparative Example 1 being 100, each of other values is shown as an index based on the following formula. The larger the index is, the more decreased the rolling resistance is, and it is shown that the rolling resistance performance is good.

$$\text{(Rolling Resistance Index)} = \text{(Rolling Resistance of Standard Compounding Ingredient)} / \text{(Rolling Resistance of Each Compounding Ingredient)} \times 100$$

<Wear Resistance>

A test tire was put on the above-described testing vehicle. The test vehivle was run on a test course of an asphalt road surface at 80 km/h, and the remaining groove value after a 30000 km run was measured. Then, the wear resistance index of each compounding ingredient was obtained based on the following formula with the wear resistance index of a standard compounding ingredient being 100. The larger the index value is, the superior the wear resistance is. The remaining groove value after a run means the depth of the tread groove of the test tire that was put on.

$$\text{(Wear Resistance Index)} = \text{(Remaining Groove Value of Each Compounding Ingredient)} / \text{(Remaining Groove Value of Standard Compounding Ingredient)} \times 100$$

<Result of Performance Evaluation>

The evaluation results of the rolling resistance performance and the wear resistance in Examples 1 to 2 and Comparative Examples 1 to 3 are shown in Table 1. Both of Examples 1 and 2 are products obtained by kneading the organic vulcanization agent and silica into the rubber component in the first kneading step, and rubber compositions that are superior in low heat build-up property and wear resistance were obtained compared with Comparative Example 1 in which the organic vulcanization agent was compounded in the second kneading step. Comparative Examples 2 and 3 are rubber compositions in which the organic vulcanization agent was not compounded, and both are inferior in low heat build-up property and wear resistance.
Although the present invention has been described and illustrated in detail, it is clearly understood that the same is by way of illustration and example only and is not to be taken by way of limitation, the scope of the present invention being interpreted by the terms of the appended claims.

**Claims**

1. A manufacturing method for a pneumatic tire, wherein a rubber composition is used in the tread of the pneumatic tire, wherein the rubber composition contains 30 to 150 parts by mass of silica and 0.5 to 10 parts by mass of an organic vulcanization agent to 100 parts by mass of a rubber component, wherein the method comprises

   a first kneading step of kneading the organic vulcanization agent and silica into the rubber component, and
   a second kneading step of kneading thereafter a vulcanization agent and a vulcanization accelerator into the kneaded product obtained in the first kneading step, wherein
   the organic vulcanization agent is represented by the following general formula (1):

$$R_1\text{-}(R\text{-}S_x)_n\text{-}R_2 \qquad (1),$$

   in which R is $(CH_2\text{-}CH_2\text{-}O)_m\text{-}CH_2\text{-}CH$, and $R_1$ and $R_2$ are independently hydrogen, a methyl group, a thiol group, a hydroxy group, a carboxyl group, or an aldehyde group, X is an integer of 3 to 6, n is an integer of 10 to 400, and m is an integer of 1 to 5.

2. The manufacturing method for a pneumatic tire according to claim 1, wherein the kneading temperature of the first kneading step is in the range of 120°C to 160°C, and the kneading temperature of the second kneading step is in the range of 70°C to 100°C.

**Patentansprüche**

1. Herstellungsverfahren für einen Luftreifen, wobei eine Kautschukzusammensetzung in der Lauffläche des Luftreifens verwendet wird,

   wobei die Kautschukzusammensetzung 30 bis 150 Masseteile Silica und 0,5 bis 10 Masseteile eines organischen Vulkanisationsmittels bezogen auf 100 Masseteile einer Kautschukkomponente enthält, wobei das Verfahren umfasst
   einen ersten Knetschritt eines Knetens des organischen Vulkanisationsmittels und Silicas in die Kautschukkomponente, und
   einen zweiten Knetschritt eines Knetens im Anschluss daran eines Vulkanisationsmittels und eines Vulkanisationsbeschleunigers in das geknetete Produkt, das in dem ersten Knetschritt erhalten wird, wobei
   das organische Vulkanisationsmittel durch die folgende allgemeine Formel (1) dargestellt ist:

$$R_1\text{-}(R\text{-}S_x)_n\text{-}R_2 \qquad (1)$$

   wobei R $(CH_2\text{-}CH_2\text{-}O)_m\text{-}CH_2\text{-}CH$ ist, und $R_1$ und $R_2$ unabhängig Wasserstoff, eine Methylgruppe, eine Thiolgruppe, eine Hydroxygruppe, eine Carboxylgruppe oder eine Aldehydgruppe sind, X eine ganze Zahl von 3 bis 6 ist, n eine ganze Zahl von 10 bis 400 ist, und m eine ganze Zahl von 1 bis 5 ist.

2. Herstellungsverfahren für einen Luftreifen nach Anspruch 1, wobei die Knettemperatur des ersten Knetschrittes im Bereich von 120°C bis 160°C liegt, und die Knettemperatur des zweiten Knetschrittes im Bereich von 70°C bis 100°C liegt.

**Revendications**

1. Procédé de fabrication d'un pneumatique, selon lequel une composition de caoutchouc est utilisée dans la bande de roulement du pneumatique,
   selon lequel la composition de caoutchouc contient de 30 à 150 parts en masse de silice et de 0,5 à 10 parts en masse d'un agent de vulcanisation organique pour 100 parts en masse d'un composant de caoutchouc, le procédé comportant
   une première étape de malaxage destinée à malaxer l'agent de vulcanisation organique et la silice dans le composant de caoutchouc, et

une deuxième étape de malaxage destinée à malaxer ensuite un agent de vulcanisation et un accélérateur de vulcanisation dans le produit malaxé obtenu dans la première étape de malaxage, selon lequel l'agent de vulcanisation organique est représenté par la formule générale suivante (1) :

$$R_1\text{-}(R\text{-}S_x)_n\text{-}R_2 \qquad (1),$$

dans laquelle R est $(CH_2\text{-}CH_2\text{-}O)_m\text{-}CH_2\text{-}CH$, et $R_1$ et $R_2$ sont de manière indépendante de l'hydrogène, un groupe méthyle, un groupe thiol, un groupe hydroxy, un groupe carboxyle, ou un groupe aldéhyde, X est un entier de 3 à 6, n est un entier de 10 à 400, et m est un nombre entier de 1 à 5.

2. Procédé de fabrication d'un pneumatique selon la revendication 1, selon lequel la température de malaxage de la première étape de malaxage est de l'ordre de 120°C à 160°C, et la température de malaxage de la deuxième étape de malaxage est de l'ordre de 70°C à 100°C.

**EP 2 042 544 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006233177 A
- JP 2007177221 A
- EP 1878590 A1
- EP 1077228 A1